# EUROPEAN PATENT SPECIFICATION

(11) **EP 1 000 581 B1**
(45) Date of publication and mention of the grant of the patent: **14.02.2007**
(21) Application number: 98911000.2
(22) Date of filing: 25.03.1998
(51) Int. Cl.: A61B 6/00, G01T 1/20

(54) **HIGH RESOLUTION REAL-TIME X-RAY IMAGE APPARATUS**
ECHTZEIT - RÖNTGENABBILDUNGSSYSTEM MIT HOHER AUFLÖSUNG
APPAREIL D'IMAGERIE RAYONS X EN TEMPS REEL A HAUTE RESOLUTION

(43) Date of publication of application: 17.05.2000
(73) Proprietor: MITSUBISHI DENKI KABUSHIKI KAISHA, Chiyoda-ku Tokyo 100-8310 (JP)
(72) Inventor: IKEGAMI, Kazunori Mitsubishi Denki K.K., Tokyo 100-8310 (JP); TERATANI, Eisaku Mitsubishi Denki K.K., Tokyo 100-8310 (JP)
(74) Representative: HOFFMANN EITLE
(86) International application number: PCT/JP1998/001328
(87) International publication number: WO 1999/048423

(56) References cited:
- JP-A- 1 274 741
- JP-A- 6 277 213
- JP-A- 8 000 603
- JP-A- 8 000 609
- JP-A- 8 306 328
- JP-A- 9 206 296
- JP-U- 47 024 882

## Description

### Technical Field

The present invention relates to a high-resolution real-time X-ray image device for measuring in real-time and with high precision an X-ray transmission image which has passed through a human body so as to position an affected part when, for example, cancer radiotherapy is performed.

### Background Art

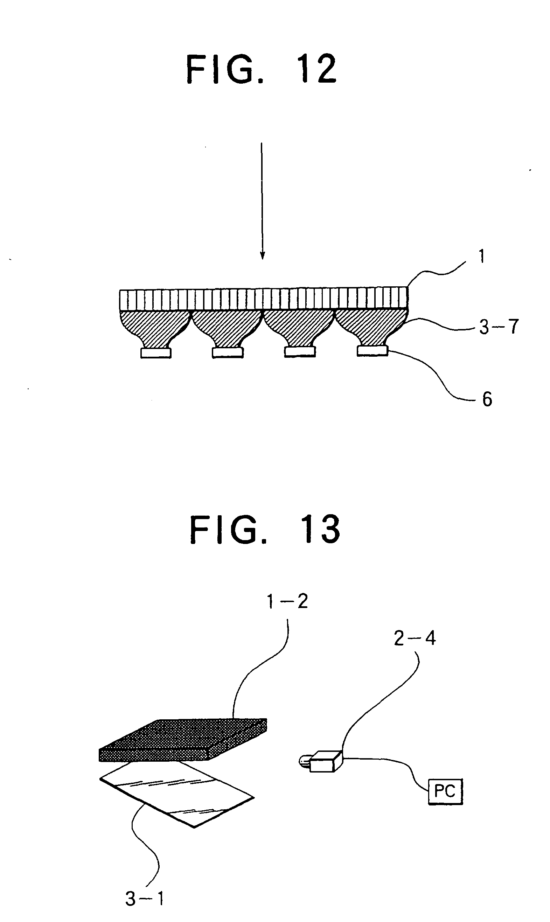

Figure 13 is, for example, a block diagram showing a conventional real-time X-ray image device shown in "Theraview :Portable Imaging System for Radiotherapy", and in the figure, symbol 1-2 shows a fluorescent plate which emits light in accordance with incident X-rays after passing through a human body, 2-4 is a CCD camera for measuring an X-ray transmission image of the fluorescent plate 1-2 (an image measuring device), and 3-1 is a mirror for performing optical transmission (an image transmission device) of the X-ray transmission image from the fluorescent plate 1-2 to the CCD camera 2-4.

Next, the operation of the conventional device will be described. The fluorescent plate 1-2 emits light of an intensity that corresponds to the amount of transmitted incident X-rays after passing through a human body. The emission distribution occurring on the fluorescent plate 1-2 is transmitted to the CCD camera 2-4 by the mirror 3-1, and an image is taken and detected as image data by the CCD camera 2-4.

Since a conventional real-time X-ray image device is constructed as described above, the device has a problem in that, if one desires to increase the resolution of a real-time X-ray transmission image, it is necessary to make the fluorescent plate thinner, but, even if the fluorescent plate is made extremely thin, the light will diffuse in transverse directions blurring the image.

The present invention is intended to solve the above-mentioned problems, and its object is to provide a real-time X-ray image device that can obtain high-resolution real-time X-ray transmission images, and can further make the resolution of the real-time X-ray transmission image high enough that the resolution can be determined by the resolution of an image measuring device.

JP 01 274 741 A discloses a radiant ray therapy part monitoring device which employs an imaging plate generating fluorescent light when an X-ray which passes through the patient reaches the imaging plate. The fluorescent image of the imaging plate is reflected by a mirror onto a high sensitive camera.

JP 47-24882 A discloses a radiotherapy system wherein an examined subject is irradiated with radiation from a radiation source and the resulting transmission image is photographed by a camera.

JP 09206296 A discloses an X-ray photographing device comprising a CCD device consisting of stepped light sensing and blocking parts and scintillating crystals that convert radiation into visible rays. The scintillation crystals are developed directly on the photographic surface by a crystal developing means such as deposition.

JP 08306328 A discloses an X-ray pickup tube comprising a number of very fine hole parts provided in a glass plate and a fluorescent material which is filled up in the hole parts. A thin glass plate is bonded by an optical bonding agent layer and a transparent electrode and an amorphous selenium film are formed on the glass plate.

### Disclosure of the Invention

1. According to the present invention, a high-resolution real-time X-ray image device is provided which comprises scintillation fiber block for emitting light when X-rays pass through the block, image measuring means for measuring as an image the light emitted by the scintillation fiber block, image transmission means for transmitting the image from the scintillation fiber block to the image measuring means, and image processing means for processing an output of the image measuring means and outputting an X-ray transmission image signal of the measured object.
2. A plurality of image measuring means measure as an image the light emitted at various different positions of the scintillation fiber block and obtain image data respectively.
3. The image measuring means measures as an image the light emitted at each different position of the scintillation fiber block while moving horizontally and vertically with respect to the light transmission surface of the scintillation fiber block to serially obtain image data.
4. A mirror is used as the image transmission means and the mirror optically transmits the image to the image measuring means.
5. A bundle fiber composed of a plurality of optical fibers is used as the image transmission means.
6. The bundle fiber has flexibility.
7. An end of the bundle fiber is cut diagonally and the image measuring means views a cutting plane from a traverse direction.
8. Respective ends of the bundle fiber are cut in directions opposite to each other, one cutting plane is located at the backface of the scintillation fiber block, and the other cutting plane is viewed by the image measuring means from a traverse direction.
9. A radiation shielding material transmitting visible light is placed between a backface of the scintillation fiber block and the image transmission means.
10. A tapered FOP (Fiber Optic Plate) is used as the image transmission means, and an image is transmitted by a plurality of pixels directly to image measuring elements.
11. A radiation shielding material transmitting visible light is placed between the scintillation fiber block and the tapered fiber optic plate.
12. The image transmission means functions as radiation shielding.
13. Cross-sectional intensity distribution of an X-ray beam, electron beam, a particle beam and the like is measured by locating the scintillation fiber block orthogonally to the beam axis of.

### Brief Description of the Drawings

Figure 1 is a block diagram of a high-resolution real-time X-ray image device according to a first embodiment of the present invention, Figure 2 is a block diagram showing a second embodiment of the present invention, Figure 3 is a block diagram showing a third embodiment of the present invention, Figure 4 is a block diagram showing a fourth embodiment of the present invention, Figure 5 is a longitudinal section of a high-resolution real-time X-ray image device according to a fifth embodiment of the present invention, Figure 6 is a longitudinal section of a high-resolution real-time X-ray image device according to a sixth embodiment of the present invention, Figure 7 is a longitudinal section of a high-resolution real-time X-ray image device according to a seventh embodiment of the present invention, Figure 8 is a longitudinal section of a high-resolution real-time X-ray image device according to a eighth embodiment of the present invention, Figure 9 is a longitudinal section of a high-resolution real-time X-ray image device according to a ninth embodiment of the present invention , Figure 10 is a block diagram a high-resolution real-time X-ray image device according to a tenth embodiment of the present invention, Figure 11 is a longitudinal section of a high-resolution real-time X-ray image device according to a eleventh embodiment of the present invention, Figure 12 is a longitudinal section of a high-resolution real-time X-ray image device acceding to a twelfth embodiment of the present invention, and Figure 13 is a block diagram showing a conventional high-resolution real-time X-ray image device.

### Best Mode for Carrying Out the Invention

### Embodiment 1:

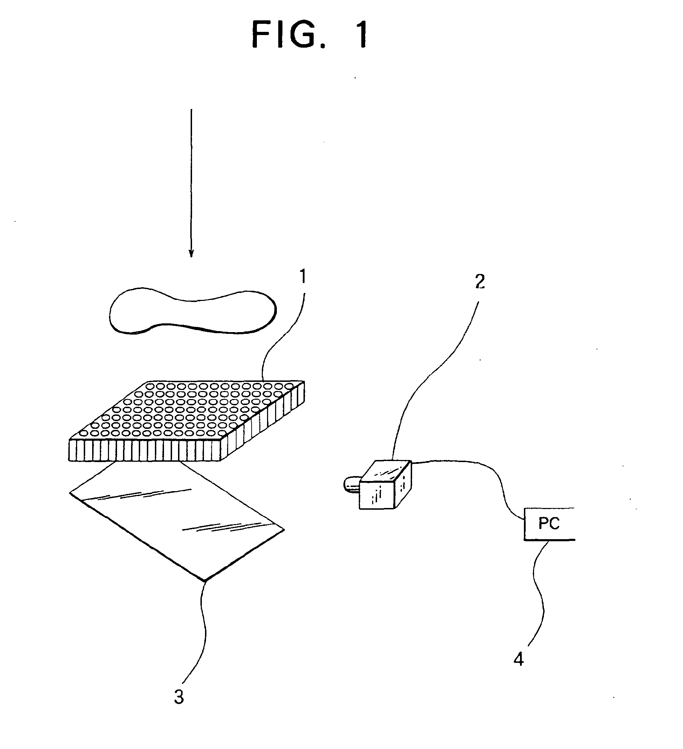

Hereinafter, a first embodiment of the present invention will be described with reference to the drawings. Figure 1 is a block diagram of a high-resolution real-time X-ray image device according to this embodiment. In the figure, a scintillation fiber block 1 emits light according to the intensity of X-rays transmitted from an object O to be measured of an image, and the scintillation fiber block 1 is made by bundling a plurality of optical fiberscopes such that its cross-section is of a honeycomb structure and its shape is a plate.

An image measuring device 2 is, for example, a CCD camera with a zoom lens for taking an image of its emission intensity distribution of the scintillation fiber block 1 as an X-ray transmission image. A image transmission device 3 such as a mirror optically guides the image of the scintillation fiber block 1 to the image measuring device 2. An image processor 4 processes the image signal output from the image measuring device 2 and output an image thus obtained.

Next, the operation of this embodiment will be described. A measured object O such as a human body is prepared the scintillation fiber block 1, and a radiation device (not shown) irradiates X-rays or other radiation having high penetrating power to the measured object O. The scintillation fiber block 1 emits light in accordance with the intensity of the transmitted X-rays, and an X-ray transmission image in accordance with the light is optically guided to the image measuring device 2 through the image transmission device 3.

In addition, the scintillation fiber block 1 is formed to have a honeycomb structure by cutting at a predetermined width after bundling a plurality of fiber scopes in a direction in which light is transmitted. Therefore, since the light forming the X-ray transmission image pass through each optical fiber scope and does not diffuse in traverse directions, the X-ray transmission image never becomes blurred.

The image measuring device 2 captures the X-ray transmission image guided by the image transmission device 3 and sends a luminance signal to the image processor 4 after having measured the luminance of each pixel constructing the image. The image processor 4 plays back the image of the measured object O on the basis of the luminance signal that is sent, and displays it on a monitor (not shown).

### Embodiment 2:

Furthermore, in the first embodiment, it has been described that the luminance of the X-ray transmission image obtained by the emission of the scintillation fiber block 1 is measured by one image measuring device 2. In this embodiment 2 an image transmitted by the image transmission device 3 is divided into a plurality of blocks so as to further increase the resolution, so that plurality of image measuring devices are provided for capturing the X-ray transmission image for every block and for measuring the luminance and performing image processing after synthesizing the measured signals of each image measuring device.

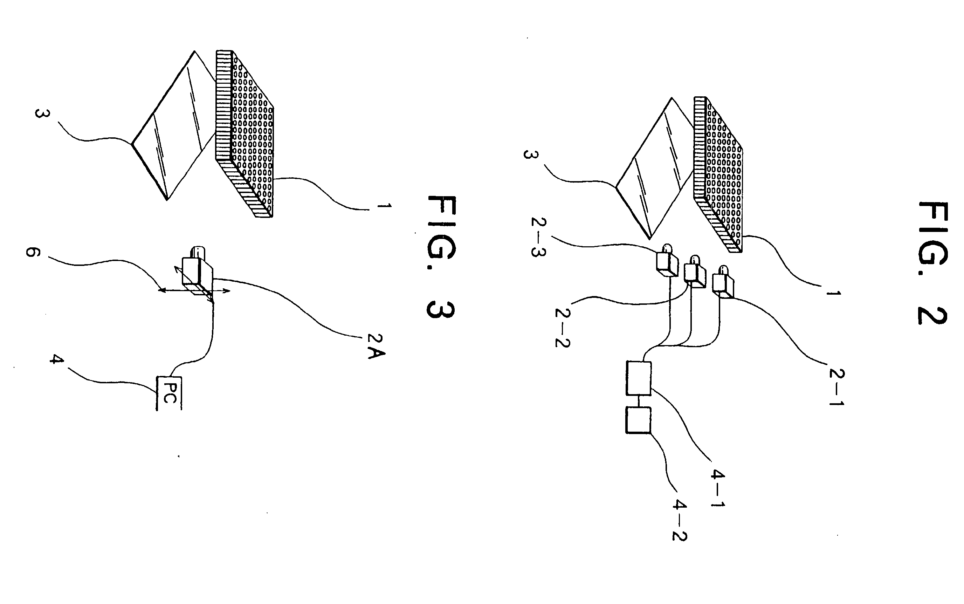

Figure 2 is a block diagram of a high-resolution real-time X-ray image device according to this embodiment. In addition, the same symbols show parts that are the same as or equivalent to those in Figure 1. In this figure, a plurality of image measuring devices 2-1, 2-2 and 2-3 capture images, which are transmitted by the image transmission device 3, for every block and also measure their luminance. An image synthesizing unit 4-1 synthesizes respective luminance signals from the image measuring devices 2-1, 2-2, and 2-3 and outputs the result to the image processor 4-2.

Next, the operation of this embodiment will be described.

If one desires to take an entire X-ray transmission image with a single image measuring device 2 and to obtain an enlarged play-back image, it is unavoidable that the image will become blurred because of resolution.

In this embodiment, however the image measuring devices 2-1, 2-2 and 2-3 capture an X-ray transmission image, displayed on the image transmission device 3 after having passed through the scintillation fiber block 1, for each of the predetermined plurality of blocks while measuring luminance. Consequently, images of each different location of the scintillation fiber block 1 are taken respectively and their luminance is measured. Luminance signals for each image measuring devices 2-1, 2-2 and 2-3 are synthesized by the image synthesizing unit 4-1, and are sent to the image processor 4-2, where an image to be measured is displayed on a monitor. Hence, it is possible to obtain a high-resolution X-ray transmission image by increasing the spatial resolution of the X-ray transmission image.

### Embodiment 3:

Further, in the first embodiment, it have been described that one fixed image measuring device 2 captures an X-ray transmission image obtained with the emission of the scintillation fiber block 1 and measures luminance. Nevertheless, in order to obtain a high-resolution X-ray transmission image with a simple configuration, an image measuring device scans an X-ray transmission image while being moved crosswise (X-Y directions) in relation to the light incident surface of the image transmission device 3.

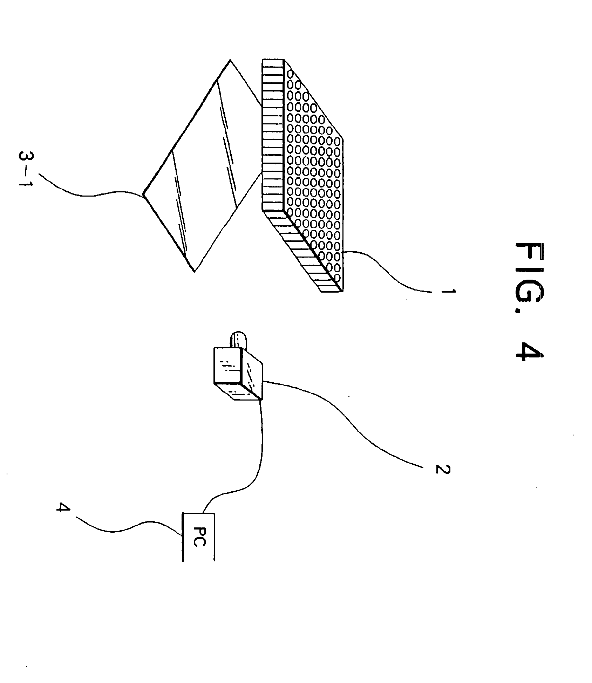

Figure 3 is a block diagram of a high-resolution real-time X-ray image device according to this embodiment. In addition, in this figure, the same symbols show parts that are the same as or equivalent to those in Figure 1. In this figure, an image measuring device 2A according to this embodiment is moved in the X-Y directions by an X-Y axes drive unit (not shown) and scans an X-ray transmission image displayed on the light incident surface of the image transmission device 3.

With this construction, the image measuring device 2A scans the X-ray transmission image displayed on the image transmission device 3 while being moved in the X-Y directions by a drive unit 6, and captures an image sequentially while measuring luminance. Therefore, it is possible to obtain a high-resolution image by increasing the spatial resolution of the X-ray transmission image.

### Embodiment 4:

In addition, in the first embodiment, it has been described that the image transmission device 3 guides the emitted light of the scintillation fiber block 1 to the image measuring device 2 by means of light reflection. However, in a high-resolution real-time X-ray image device according to this embodiment, as shown in Figure 4, a mirror 3-1 is provided as an image transmission device below the scintillation fiber block 1, and the direction of the X-ray transmission image transmitted through the scintillation fiber block 1 is changed almost 90 degrees, a direction in which the image measuring device 2 is located. Consequently, since it is possible to prevent noise caused by X-rays and other radiation from entering the image measuring device 2, a clear image output can be obtained.

### Embodiment 5:

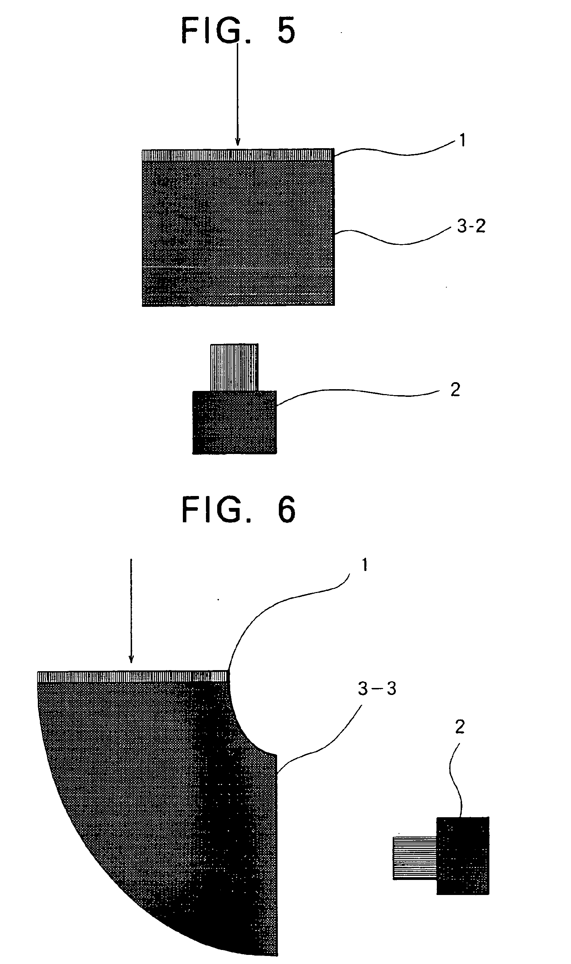

Furthermore, in the first embodiment, it has been described that the image transmission device 3 guides the emitted light of the scintillation fiber block 1 to the image measuring device 2 by means of light reflection. In this embodiment, as shown in Figure 5, a linear bundle fiber 3-2 that is constructed by bundling a plurality of fiberscopes is connected under the scintillation fiber block 1 as an image transmission device, and the image measuring device 2 is located below an end thereof.

Consequently, since the bundle fiber 3-2 can transmit X-ray transmission images from the scintillation fiber block 1 over long distances, it becomes possible to prevent the noise caused by X-rays and other radiation from entering the image measuring device 2, and hence it becomes possible to obtain a clear image output cab be obtained.

### Embodiment 6:

Moreover, in the fifth embodiment, it has been described that the linear bundle fiber 3-2 transmits the X-ray transmission image of the scintillation fiber block 1, but as shown in Figure 6, a flexible bundle fiber 3-3, which can be bent in an optional direction, is connected to the scintillation fiber block 1 as an image transmission device.

Consequently, it becomes possible for the image measuring device 2 to measure the X-ray transmission image at a discretional location, and hence a clear image output can be obtained.

### Embodiment 7:

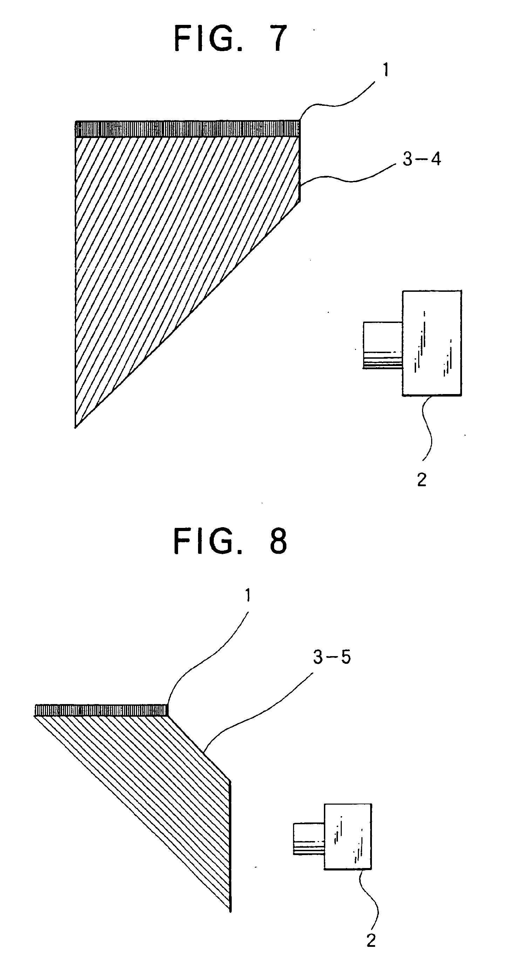

In addition, in the fifth embodiment, it has been described that the bundle fiber 3-2 transmits the X-ray transmission image of the scintillation fiber block 1, but as shown in Figure 7, an end surface of a bundle fiber 3-4 which is located under the scintillation fiber block 1 is cut diagonally, and this diagonal surface is located so that it is in the visual field of the image measuring device mounted orthogonal to the bundle fiber 3-4. Consequently, since the image measuring device 2 can measure the X-ray transmission image from the side of the bundle fiber 3-4, it becomes possible to prevent noise caused by X-rays and other radiation from entering the image measuring device 2, and at the same time, it becomes possible to obtain a image output.

### Embodiment 8:

In addition, in the fifth embodiment, it has been described that the bundle fiber 3-2 transmits the X-ray transmission image of the scintillation fiber block 1, but as shown in Figure 8, opposite end surfaces of a bundle fiber 3-5 are cut diagonally in opposite orthogonal directions respectively, one end surface is located under the scintillation fiber block 1, and the other end surface is located within the visual field of the image measuring device 2. Consequently, it becomes possible to align the end surface with the visual field of the image measuring device 2 by adjusting the mounting angle of the bundle fiber 3-5.

Moreover, since the image measuring device 2 can measure the X-ray transmission image from the side of the bundle fiber 3-5, it becomes possible to prevent noise caused by X-rays and other radiation from entering the image measuring device 2, thus obtaining a clear image output.

### Embodiment 9:

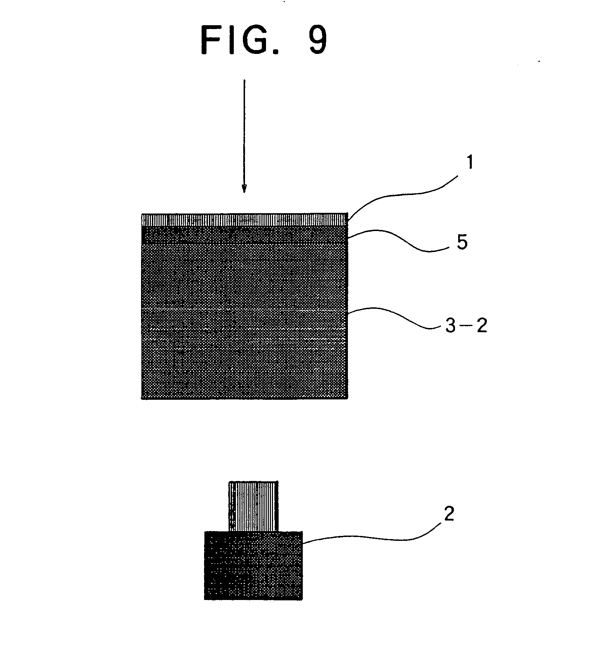

Furthermore, in the above-mentioned first to eighth embodiments, it has been described that the image measuring device 2 is protected from X-rays and other radiation, which cause noise in an image signal during image transmission without shielding against them. As shown in Figure 9, however, it becomes possible to prevent the noise caused by the X-rays and other radiation from entering the image measuring device 2 by providing a radiation shielding material 5 on a surface of the scintillation fiber block 1 which is incident to X-rays passing through a measured object O, and to thus obtain a clear image output.

### Embodiment 10:

In addition, in the second embodiment, it has been described that the image transmission device 3 optically guides an X-ray transmission image of the scintillation fiber block 1 to the image measuring device 2 through space.

In this embodiment, by using an optical fiber directly connected between the scintillation fiber block 1 and image measuring elements (CCDs) constituting an image measuring device, an X-ray transmission image is transmitted from the scintillation fiber block 1 to the image measuring elements.

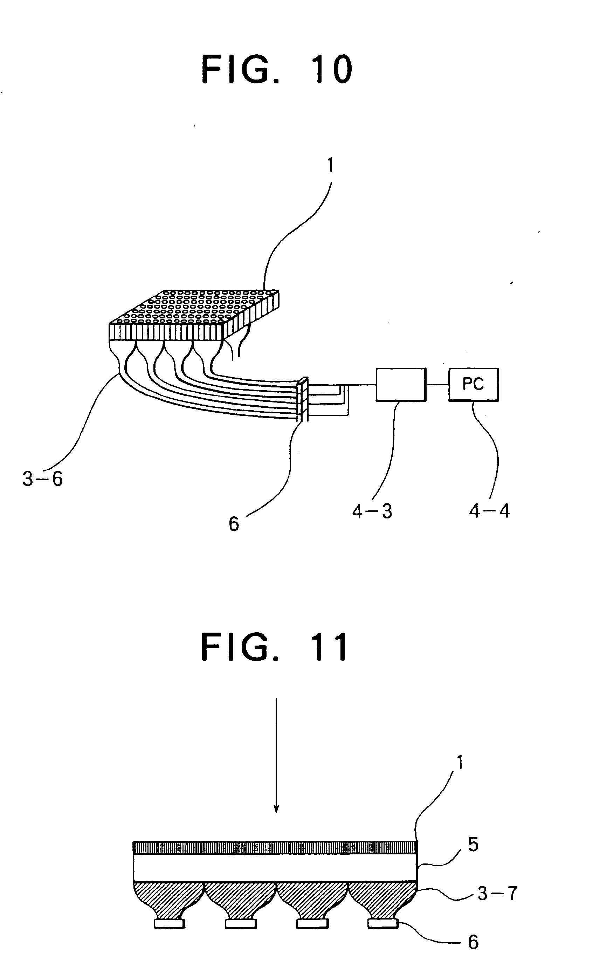

Figure 10 is a block diagram of a high-resolution real-time X-ray image device according to this embodiment. In this figure, a scintillation fiber block 1 according to this embodiment is constructed such that the scintillation fiber thereof being divided into a number of blocks corresponding to the number of the image measuring elements 6. A tapered fiber optic plate 3-6 (hereinafter, called an optic plate) has an end thereof formed in a tapered shape, the X-ray transmission images are taken from the scintillation fiber block that is further divided into blocks at the end thereof, and the images are transmitted to corresponding image measuring elements 6 through an image shield connected to an end thereof. An image synthesizing unit 4-3 synthesizes luminance signals measured by respective image measuring elements 6 and sends the synthesized signal to the image processor 4-4.

Next, the operation of this embodiment will be described.

The X-ray transmission images are sent from the scintillation fiber block 1A to the corresponding image measuring elements 6 through the optic plate 3-6. These transmitted X-ray transmission images are taken by respective image measuring elements 6 while their luminance is measured. These luminance signals are synthesized by the image synthesizing unit 4-3, the synthesized signal is sent to image processor 4-4, which processes the X-ray transmission image which is then output to a monitor unit.

Consequently, it becomes possible to obtain a high-resolution image by increasing the spatial resolution of an X-ray transmission image.

### Embodiment 11:

Furthermore, in the tenth embodiment, it has been described that the optic plate 3-6 guides the X-ray transmission image of the scintillation fiber block 1 to the image measuring elements and image measurement is performed. In this embodiment, as shown in Figure 11, a radiation shielding material 5 transmitting visible light is provided between the scintillation fiber block 1 and the optic plate 3-7 to shield X-rays and electron beams incident on the scintillation fiber block 1. Consequently, since it becomes possible to mount the image measuring elements 6 directly under the scintillation fiber block 1, the entire device can be miniaturized.

### Embodiment 12:

Moreover, in the tenth embodiment, it has been described that the optic plate 3-7 guides the X-ray transmission image of the scintillation fiber block 1 to the image measuring elements 6 and luminance measuring is performed. In this embodiment, as shown in Figure 12, a tapered fiber optic plate 3-7 is made of a material that transmitted visual light but functions as radiation shielding for shielding incoming X-rays and electron beams in the scintillation fiber block 1.

Consequently, since it becomes possible to mount the image measuring elements 6 directly under the scintillation fiber block 1, the entire device can be miniaturized.

In addition, although a high-resolution real-time X-ray image device for medical treatment has been described in each of the above-mentioned embodiments, the present invention may also be applied to a high-resolution real-time X-ray image device used for detecting soldering flaws, in a printed board, or a high-resolution real-time X-ray image device measuring the cross-sectional intensity distribution of a beam by locating the scintillation fiber block orthogonal to an axis of an X-ray beam an electron beam, a particle beam, and the like, and when such is done, they exhibit the same effects as in the above-mentioned embodiments.

### Industrial Applicability

According to the present invention, it is possible to obtain a real-time X-ray image device that can obtain a high-resolution real-time X-ray transmission image, where the resolution of the real-time X-ray transmission image can be increased to the extent that the resolution is determined by the resolution of an image measuring device.

## Claims

1. A high-resolution real-time X-ray image device comprising a scintillation fiber block (1) for emitting light when X-rays pass through the fibers of the scintillation fiber block, image measuring means (2, 2-1, 2-2, 2-3, 2-4, 2A, 6) for measuring as an image the light emitted by the scintillation fiber block, image transmission means (3, 3-1,3-2, 3-3, 3-4, 3-5, 3-6, 3-7) for transmitting the image from said scintillation fiber block to said image measuring means, and image processing means (4, 4-1, 4-2, 4-3, 4-4) for processing an output of said image measuring means and outputting an X-ray transmission image signal of a measured object.

2. The high-resolution real-time X-ray image device according to claim 1, wherein a plurality of image measuring means (2-1, 2-2, 2-3) measure as an image the light emitted at each different position of the scintillation fiber block and obtain respective image data.

3. The high-resolution real-time X-ray image device according to claim 1, wherein the image measuring means (2A) measures as an image the light emitted at each different position of the scintillation fiber block while moving in horizontal and vertical directions in respect to a light transmission surface of the scintillation fiber block to serially obtain image data.

4. The high-resolution real-time X-ray image device according to claim 1, wherein a mirror (3, 3-1) is used as the image transmission means, the mirror optically transmitting an image to the image measuring means.

5. The high-resolution real-time X-ray image device according to claim 1, wherein a bundle fiber (3-2, 3-3, 3-4, 3-5) composed of a plurality of optical fibers is used as the image transmission means.

6. The high-resolution real-time X-ray image device according to claim 5, wherein the bundle fiber (3-3) has flexibility.

7. The high-resolution real-time X-ray image device according to claim 5, wherein an end of the bundle fiber (3-4) is cut diagonally and the image measuring means views a cut surface from a direction traverse thereto.

8. The high-resolution real-time X-ray image device according to claim 5, wherein respective ends of the bundle fiber (3-2) are cut in directions opposite to each other, one cutting plane being located behind the scintillation fiber block, and another cutting plane being viewed by the image measuring means from a direction traverse thereto.

9. The high-resolution real-time X-ray image device according to claim 1, wherein a radiation shielding material (5) that transmits visible light is placed between a backface of the scintillation fiber block (1) and the image transmission means (3-2, 3-7).

10. The high-resolution real-time X-ray image device according to claim 1, wherein a tapered FOP (Fiber Optic Plate) (3-6) is used as the image transmission means, and an image is transmitted by a plurality of pixels directly to image measuring elements (6).

11. The high-resolution real-time X-ray image device according to claim 10, wherein a radiation shielding material (5) transmitting visible light is placed between the scintillation fiber block (1) and the tapered fiber optic plate (3-6).

12. The high-resolution real-time X-ray image device according to claim 10, wherein the image transmission functions as radiation shielding.

13. The high-resolution real-time X-ray image device according to claim 1, wherein cross-sectional intensity distribution of a beam is measured by locating the scintillation fiber block orthogonal to a beam axis of an X-ray beam, an electron beam, a particle beam, and the like.

## Patentansprüche

1. Hochauflösende Echtzeit-Röntgenbildvorrichtung umfassend einen Szintillationsfaserblock (1) zur Emission von Licht wenn Röntgenstrahlen durch die Fasern des Szintillationsfaserblocks hindurch treten, Bildmessmittel (2, 2-1, 2-2, 2-3, 2-4, 2A, 6) zum Messen des Lichts, welches durch den Szintillationsfaserblock emittiert wird, als ein Bild, Bildübertragungsmittel (3, 3-1, 3-2, 3-3, 3-4, 3-5, 3-6, 3-7) zum Übertragen des Bildes von dem Szintillationsfaserblock an die Bildmessmittel, und Bildbearbeitungsmittel (4, 4.1, 4-2, 4-3, 4-4) zum Bearbeiten eines Ausganges des Bildmessmittels und zum Ausgeben eines Röntgentransmissionsbildsignals eines gemessenen Objekts.

2. Hochauflösende Echtzeit-Röntgenbildvorrichtung gemäß Anspruch 1, wobei eine Mehrzahl von Bildmessmitteln (2-1, 2-2, 2-3) das Licht an jeder unterschiedlichen Position des Szintillationsfaserblockes als ein Bild messen und die jeweiligen Bilddaten erhalten.

3. Hochauflösende Echtzeit-Röntgenbildvorrichtung gemäß Anspruch 1, wobei das Bildmessmittel das Licht, das an jeder unterschiedlichen Position des Szintillationsfaserblocks emittiert wird, als ein Bild misst, während es sich in horizontalen und vertikalen Richtungen bezüglich einer Lichtübertragungsoberfläche des Szintillationsfaserblockes bewegt, um seriell Bilddaten zu erhalten.

4. Hochauflösende Echtzeit-Röntgenbildvorrichtung gemäß Anspruch 1, wobei ein Spiegel (3, 3-1) als das Bildübertragungsmittel verwendet wird, wobei der Spiegel ein Bild optisch an das Bildmessmittel überträgt.

5. Hochauflösende Echtzeit-Röntgenbildvorrichtung gemäß Anspruch 1, wobei ein Faserbündel (3-2, 3-3, 3-4, 3-5), welches aus einer Mehrzahl optischer Fasern zusammengesetzt ist, als Bildübertragungsmittel verwendet wird.

6. Hochauflösende Echtzeit-Röntgenbildvorrichtung gemäß Anspruch 5, wobei das Faserbündel (3-3) flexibel ist.

7. Hochauflösende Echtzeit-Röntgenbildvorrichtung gemäß Anspruch 5, wobei ein Ende des Faserbündels (3-5) diagonal angeschnitten ist und das Bildmessmittel eine geschnittene Oberfläche aus einer Richtung quer dazu betrachtet.

8. Hochauflösende Echtzeit-Röntgenbildvorrichtung gemäß Anspruch 5, wobei die jeweiligen Enden des Faserbündels (3-2) in Richtungen gegenüberliegend zueinander geschnitten werden, wobei eine Schnittebene hinter dem Szintillationsfaserblock angeordnet ist, und eine andere Schnittebene durch das Bildmessmittel aus einer Richtung quer dazu betrachtet ist.

9. Hochauflösende Echtzeit-Röntgenbildvorrichtung gemäß Anspruch 1, wobei ein Strahlung abschirmendes Material (5) welches sichtbares Licht überträgt, zwischen einer Rückenfläche des Szintillationsfaserblockes (1) und dem Bildübertragungsmittel (3-2, 3-7) angeordnet ist.

10. Hochauflösende Echtzeit-Röntgenbildvorrichtung gemäß Anspruch 1, wobei eine zulaufende FOP (Faseroptische Platte) (3-6) als das Bildübertragungsmittel verwendet wird und ein Bild über eine Mehrzahl von Pixeln direkt auf Bildmesselemente (6) übertragen wird.

11. Hochauflösende Echtzeit-Röntgenbildvorrichtung gemäß Anspruch 10, wobei ein Strahlung abschirmendes Material (5), welches das sichtbares Licht zwischen dem Szintillationsfaserblock (1) und der zulaufenden Faseroptischen Platte (3-6) angeordnet ist, überträgt.

12. Hochauflösende Echtzeit-Röntgenbildvorrichtung gemäß Anspruch 10, wobei die Bildübertragung als Strahlungsabschirmung dient.

13. Hochauflösende Echtzeit-Röntgenbildvorrichtung gemäß Anspruch 1, wobei die Querschnittsintensitätsverteilung eines Strahls durch Anordnen des Szintillationsfaserblockes orthogonal zu einer Strahlachse eines Röntgenstrahles, eines Elektronenstrahles, eines Partikelstrahles oder Ähnlichem gemessen wird.

## Revendications

1. Appareil d'imagerie à rayons X en temps réel de haute résolution, comprenant un bloc de fibres scintillantes (1) pour émettre de la lumière lorsque des rayons X passent à travers les fibres du bloc de fibres scintillantes, un moyen de mesure d'image (2, 2-1, 2-2, 2-3, 2-4, 2A, 6) pour mesurer sous forme d'une image la lumière émise par le bloc de fibres scintillantes, un moyen de transmission d'image (3, 3-1,3-2, 3-3, 3-4, 3-5, 3-6, 3-7) pour transmettre l'image dudit bloc de fibres scintillantes audit moyen de mesure d'image, et un moyen de traitement d'image (4, 4-1, 4-2, 4-3, 4-4) pour traiter une sortie dudit moyen de mesure d'image et délivrer un signal d'image de transmission de rayons X d'un objet mesuré.

2. Appareil d'imagerie à rayons X en temps réel de haute résolution selon la revendication 1, dans lequel une pluralité de moyens de mesure d'image (2-1, 2-2, 2-3) mesurent sous forme d'une image la lumière émise dans chaque position différente du bloc de fibres scintillantes et obtiennent des données d'image respectives.

3. Appareil d'imagerie à rayons X en temps réel de haute résolution selon la revendication 1, dans lequel le moyen de mesure d'images (2A) mesure sous forme d'une image la lumière émise dans chaque position différente du bloc de fibres scintillantes tandis qu'il se déplace dans les directions horizontale et verticale par rapport à une surface de transmission de lumière du bloc de fibres scintillantes pour obtenir en série des données d'image.

4. Appareil d'imagerie à rayons X en temps réel de haute résolution selon la revendication 1, dans lequel on utilise un miroir (3, 3-1) comme le moyen de transmission d'images, le miroir transmettant optiquement une image au moyen de mesure d'image.

5. Appareil d'imagerie à rayons X en temps réel de haute résolution selon la revendication 1, dans lequel on utilise un faisceau de fibres (3-2, 3-3, 3-4, 3-5) composé d'une pluralité de fibres optiques comme le moyen de transmission d'image.

6. Appareil d'imagerie à rayons X en temps réel de haute résolution selon la revendication 5, dans lequel le faisceau de fibres (3-3) a de la flexibilité.

7. Appareil d'imagerie à rayons X en temps réel de haute résolution selon la revendication 5, dans lequel une extrémité du faisceau de fibres (3-4) est découpée en diagonale et le moyen de mesure d'image visualise une surface découpée depuis une direction qui lui est transversale.

8. Appareil d'imagerie à rayons X en temps réel de haute résolution selon la revendication 5, dans lequel les extrémités respectives du faisceau de fibres (3-2) sont découpées dans des directions opposées l'une à l'autre, un plan de coupe étant situé derrière le bloc de fibres scintillantes et un autre plan de coupe étant visualisé par le moyen de mesure d'image depuis une direction qui lui est transversale.

9. Appareil d'imagerie à rayons X en temps réel de haute résolution selon la revendication 1, dans lequel un matériau de protection contre les rayonnements (5), qui transmet de la lumière visible, est placé entre une face arrière du bloc de fibres scintillantes (1) et le moyen de transmission d'image (3-2, 3-7).

10. Appareil d'imagerie à rayons X en temps réel de haute résolution selon la revendication 1, dans lequel on utilise un FOP (plaque de fibres optiques) conique (3-6) comme moyen de transmission d'image et une image est transmise par une pluralité de pixels directement aux éléments de mesure d'image (6).

11. Appareil d'imagerie à rayons X en temps réel de haute résolution selon la revendication 10, dans lequel un matériau de protection contre les rayonnements (5) transmettant de la lumière visible est placé entre le bloc de fibres scintillantes (1) et le panneau de fibres optiques conique (3-6).

12. Appareil d'imagerie à rayons X en temps réel de haute résolution selon la revendication 10, dans lequel la transmission d'image fonctionne comme une protection contre les rayonnements.

13. Appareil d'imagerie à rayons X en temps réel de haute résolution selon la revendication 1, dans lequel la distribution d'intensité d'un faisceau en coupe transversale est mesurée en plaçant le bloc de fibres scintillantes orthogonalement à l'axe d'un faisceau de rayons X, d'un faisceau d'électrons, d'un faisceau de particules et analogue.
